# EUROPÄISCHE PATENTSCHRIFT

(11) **EP 0 696 414 B1**
(45) Veröffentlichungstag und Bekanntmachung des Hinweises auf die Patenterteilung: **27.10.1999**
(21) Anmeldenummer: 95112400.7
(22) Anmeldetag: 07.08.1995
(51) Int. Cl.: A01D 34/73

(54) **Mähfaden für Freischneide-Geräte**
Cutting line for string cutter devices
Dispositif de coupe à filament

(30) Priorität: 11.08.1994 DE 9412925 U
(43) Veröffentlichungstag der Anmeldung: 14.02.1996
(73) Patentinhaber: Dolmar GmbH, 22045 Hamburg (DE)
(72) Erfinder: Behrendt, Martin, D-22111 Hamburg (DE)
(74) Vertreter: Richter, Werdermann & Gerbaulet

(56) Entgegenhaltungen:
- EP-A- 0 260 158
- DE-A- 4 005 879
- US-A- 3 831 278
- US-A- 4 186 239

## Beschreibung

Die Erfindung geht aus von einem Mähfaden für Freischneidegeräte mit einem Antriebsmotor, der den an einem Ende eingespannten Mähfaden in Rotation versetzt, wobei sich der Mähfaden aufgrund der Zentrifugalkraft im wesentlichen radial nach außen erstreckt, und der Mähfaden so gestaltet ist, daß er bezogen auf seine Längsachse eine sich ändernde Lage des Querschnitts aufweist.

Bei Freischneidegeräten wird der Mähfaden mit hohen Drehzahlen bis zu zehntausend U/min. in Rotation gesetzt, was zu einer erheblichen Geräuschentwicklung beim Betrieb der Freischneidegeräte führt. Um dieses Problem zu lösen, sind schon verschiedenste Vorschläge gemacht worden.

So ist aus der US-A-41 86 239 ein Mähfaden bekannt, der aus Nylon besteht und im wesentlichen einen runden oder elliptischen Querschnitt besitzt, wobei an der Mantelfläche des Mähfadens eine Vielzahl von quer zur Längsachse verlaufenden Kerben angeordnet sind. Bei einer anderen Ausführungsform ist ein Mähfaden vorgesehen, der aus Zwei oder mehreren Fadenkörpern besteht, die an ihrer Längsachse miteinander verbunden oder zu einem sternförmigen Profil zusammengefaßt sind. Diese Ausführungen von Mähfäden haben einen durchweg punktsymmetrischen Querschnitt. Die sich zur Längsachse erstreckenden Kerben sollen verhindern, daß der Nylonfaden ausfranst, daß heißt die Kerben stellen Sollbruchkanten am freien Ende des Mähfadens dar.

Aus der EP-A- 0 260 158 sind verschiedene Ausführungsformen eines Mähfadens bekannt, wobei alle vorgeschlagenen Querschnitte punktsymmetrisch sind und entweder eine sternförmige Ausbildung oder die Form eines eingezogenen Bogenvierecks aufweisen.

Aus der DE 40 05 879 C1 ist ein Mähfaden bekannt, der bezogen auf seine Längsachse eine sich ändernde Lage seines Querschnittes aufweist, wobei dort erfindungsgemäß vorgesehen ist, daß der Mähfaden einen von der Punktsymmetrie abweichenden, nämlich punktunsymmetrischen Querschnitt hat. Hierzu weist der Mähfaden an der Mantelfläche seines nahezu den gesamten Querschnitt des Mähfaden bildenden Grundkörpers mindestens eine sich schraubenlinienförmig erstreckende Nut und/oder Erhebung auf, wobei sich die Nut bzw. Erhebung ohne Unterbrechung mit konstanter Tiefe bzw. Höhe und Breite entlang der Schraubenlinie erstreckt. Ein solcher Mähfaden zeigt immer noch störend erhebliche Geräuschentwicklungen was auf Luftwirbelbildung und -ablösung an dem mit entsprechend hoher Winkelgeschwindigkeit rotierenden Mähfaden beruht. Außerdem ist die Herstellung aufwendig und die Standfestigkeit ist aufgrund der auftretenden Kerbwirkung unbefriedigend.

Es ist daher Aufgabe der vorliegenden Erfindung, einen Mähfaden der eingangs genannten Art zu schaffen, bei dem auch bei hoher Dreh- bzw. Umlaufgeschwindigkeit des Mähfadens eine erhebliche Geräuschreduktion gegenüber den bekannten Mähfadenausführungsform erreichbar ist, der einfach herstellbar ist und eine hohe Standfestigkeit zeigt.

Diese Aufgabe wird durch die im Anspruch 1 angegebenen Merkmale gelöst.

Der Kerngedanke bei der neuen Ausführungsform besteht darin, daß der Mähfaden einen punktsymmetrischen Querschnitt hat.

Dieser punktsymmetrische, bevorzugterweise quadratische Querschnitt wird über die ganze Längsachse konstant gehalten, so daß in jeder von der Längsachse rechtwinklig durchtretenden Schnittebene ein formgleicher Querschnitt des Mähfadens gegeben ist. Jedoch ändert sich erfindungsgemäß die Lage des Querschnittes bezogen auf die Längsachse kontinuierlich um einen bestimmten Winkelbetrag pro Längeneinheit der Längsachse. Dies führt bei einem quadratischen Querschnitt dazu, daß der Mähfaden kein klassisches Vierkantprofil aufweist, sondern daß sich die vier Kanten schraubenlinienförmig erstrecken.

Es hat sich gezeigt, daß es möglich ist, mit einer solchen Ausbildung eines Mähfadens verschiedenste Vorteile zu vereinen, da durch diese Ausbildung
- der Strömungswiderstand geringer wird
- die Lärmentwicklung reduziert wird
- die Werkzeugdrehzahl bei gleicher Leistung erhöht wird
- ein gleichmäßigerer Lauf auf der Rotationsebene (d.h., ohne Fadenausschlag) erreicht wird
- der Mähfaden besser umströmt wird.

Ein weiterer Vorteil besteht darin, daß die Verschleißfestigkeit sich nicht durch Kerben wie bei Fäden mit Nuten oder Sternprofilen durch Kerbwirkungen verringert.

Weiterhin hat es sich gezeigt, daß es auch von erheblichen Einfluß auf die positiven Eigenschaften des Mähfadens ist, um welchen Winkelbetrag pro Längeneinheit sich die Lage des Querschnitts ändert. Dabei hat sich ergeben, daß eine Änderung von einem Winkelbetrag pro Längeneinheit der Längsachse des Mähfadens von etwa 18 Grad pro mm besonders vorteilhafte Ergebnisse bringt. Ein solcher Faden wird durch Verdrehung bzw. Verdrillung hergestellt, wobei die Herstellung so erfolgt, daß der Querschnitt erhalten bleibt. Um den Drill auszudrücken, wurde folgende Bezeichnung und Einheit festgelegt:
Bezeichnung: Drillgrad
Einheit: Verdrehung pro Meter (V/m).
Ein Drillgrad in der Größenordnung von 20 V/m bedeutet, daß der Mähfaden auf einem Meter zwanzig Mal um 360 Grad um seine Längsachse verdrillt ist. Wie schon voranstehend angegeben, haben Versuche mit unterschiedlichem Drillgrad ergeben, daß ein Mähfaden mit einem entsprechenden Drillgrad von 50 V/m die günstigsten Eigenschaften aufweist.

Es hat sich als vorteilhaft herausgestellt, den Mähfaden, der aus einem thermoplastischen Material besteht, herzustellen, indem dieser zunächst eingespannt wird, dann verdreht wird und anschließend durch Zufuhr von Wärme bleibend verformt wird. Der Vorteil besteht darin, daß der Fadenquerschnitt über die ganze Längsachse erhalten bleibt, was bei einer Formgebung mit beispielsweise Kerben nicht der Fall ist. Weiterhin hat es sich gezeigt, daß aufgrund der geringeren Lärmerzeugung der Mähfaden unter Umweltgesichtspunkten und Gesichtspunkten des Schutzes am Arbeitsplatz besser einsetzbar ist. Darüber hinaus kann noch eine höhere Werkzeugdrehzahl und damit eine höhere Schnittleistung erreicht werden.

Vorteilhafte Ausgestaltungen und Weiterbildungen der Erfindung sind in den Unteransprüchen gekennzeichnet.

Ein Ausführungsbeispiel des erfindungsgemäßen Freischneidegerätes wird nachstehend anhand der Zeichnungen näher erläutert. Es zeigen
- Fig. 1: in einer schaubildlichen Ansicht ein Freischneidegerät in schematischer Darstellung,
- Fig. 2: in einer schaubildlichen Längsansicht einen Mähfaden und
- Fig. 3: den Mähfaden gemäß Fig. 2 mit angedeuteten Querschnittsdarstellungen.

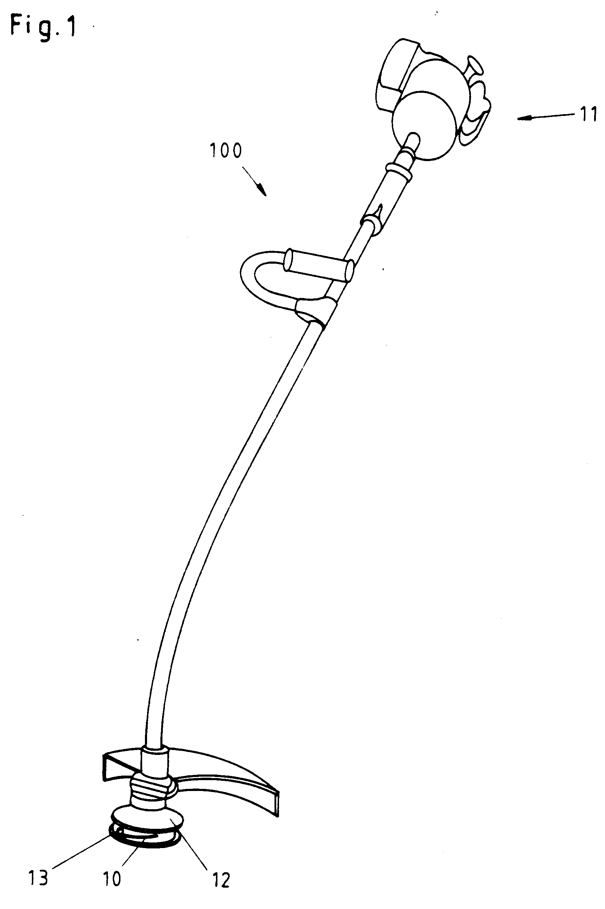

In Fig. 1 ist ein Freischneidegerät 100 dargestellt, bei dem der Mähfaden 10 über einen Antriebsmotor 11 in Rotation versetzt wird, wobei der Mähfaden 10 an einem Drehteil 12 mit einem Ende 13 eingespannt ist, so daß sich der Mähfaden 10 bei Rotation des Drehteils 12 im Wesen radial nach außen erstreckt.

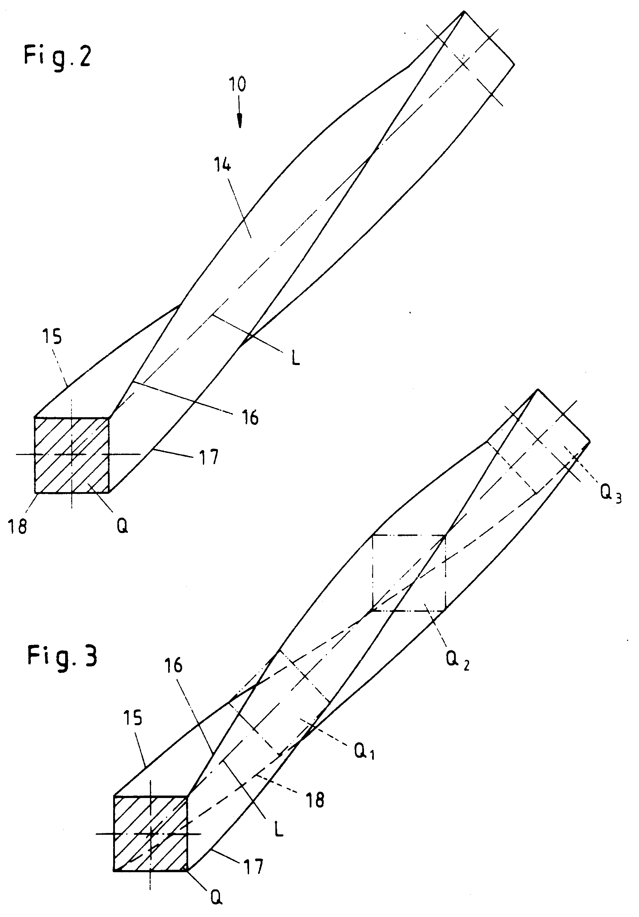

In den Figuren 2 und 3 ist ein Abschnitt 14 des Mähfadens 10 in vergrößerter Darstellung rein schematisch dargestellt, woraus sich die erfindungsgemäße Ausgestaltung des Mähfadens besser ergibt. Der Mähfaden selbst weist eine quadratische Querschnittsform Q auf, die im Bezug auf die Längsachse L konstant ist. Jedoch ist erfindungsgemäß vorgesehen, daß sich die Querschnittsform Q entlang der Längsachse zwar nicht ändert, daß sie jedoch um einen bestimmten Winkelbetrag lageverändert ist. Dies ist in Fig. 3 angedeutet, wo der um 45 Grad gedrehte Querschnitt Q1 und der um 90 Grad gedrehte Querschnitt Q2 sowie der um 135 Grad gedrehte Querschnitt Q3 hervorgehoben sind. Durch die Drehung der Querschnittsform und damit die Drehung des Mähfadens 10 ergibt es sich, daß die Seitenkanten 15, 16, 17, 18 schraubenlinienförmig um die Längsachse L umlaufen. Da sich die Lage der Querschnittsform Q bezogen auf die Längsachse L um einen Betrag von etwa 18 Grad /mm ändert, laufen die Schraubenlinien auf 20 mm Länge einmal um den Mähfaden herum.

### Bezugszeichenliste

- Freischneidegerät: 100
- Mähfaden: 10
- Antriebsmotor: 11
- Drehteil: 12
- Ende: 13
- Abschnitt: 14
- Querschnitt: Q, Q1, Q2, Q3
- Längsachse: L
- Seitenkanten: 15, 16, 17, 18

## Patentansprüche

1. Mähfaden (10) für Freischneidegeräte (100) mit einem Antriebsmotor (11), der den an einem Ende (13) eingespannten Mähfaden (10) in Rotationsbewegung versetzt, wobei sich der Mähfaden (10) aufgrund der Zentrifugalkraft im wesentlichen radial nach außen erstreckt und der Mähfaden (10) so gestaltet ist, daß er bezogen auf seine Längsachse (L) eine sich ändernde Lage des Querschnitts aufweist, daß der Mähfaden (10) einen punktsymmetrischen Querschnitt hat und daß der Querschnitt (Q, Q1, Q2, Q3) bezogen auf die Längsachse (L) konstant ist,
dadurch gekennzeichnet,
daß sich die Lage des Querschnitts bezogen auf die Längsachse (L) kontinuierlich um einen konstanten Winkelbetrag pro Längeneinheit der Längsachse (L) ändert und daß der Mähfaden einen polygonalen Querschnitt (Q, Q1, Q2, Q3) hat.

2. Mähfaden nach Anspruch 1,
dadurch gekennzeichnet,
daß der Mähfaden (10) mehrere sich längs des Mähfadens (10) erstreckenden Seitenkanten (15, 16, 17, 18) aufweist, die zueinander einen konstanten Abstand haben und von denen jede schraubenlinienförmig in einem Abstand zur Längsachse (L) um diese umlaufend verläuft.

3. Mähfaden nach Anspruch 1 und 2,
dadurch gekennzeichnet,
daß sich die Lage des Querschnitts (Q, Q1, Q2, Q3) bezogen auf die Längsachse (L) um einen Betrag von etwa 18 Grad pro mm ändert.

4. Mähfaden nach Anspruch 1 oder 2,
dadurch gekennzeichnet,
daß der Mähfaden (10) unter Beibehaltung des polygonalen Querschnitts (Q, Q1, Q2, Q3) bleibend verdrillt ist, wobei die Verdrillung, d.h. die Verdrehung des umgedrehten Ausgangsmähfadens, etwa 50 Verdrehungen pro Meter der Längsachse (L) beträgt.

5. Mähfaden nach einem der Ansprüche 1 bis 4,
dadurch gekennzeichnet,
daß der Mähfaden (10) aus einem thermoplastischen Material besteht und durch Einspannen, Verdrehen und durch durch anschließende Zufuhr von Wärme bleibendes Verformen hergestellt ist.

6. Mähfaden nach einem der Ansprüche 1 bis 5,
dadurch gekennzeichnet,
daß der Mähfaden (10) einen quadratischen Querschnitt (Q, Q1, Q2, Q3) hat.

## Claims

1. A mowing thread (10) for brush cutters (100) with a driving motor (11) which sets the mowing thread (10) locked at one end (13) in motion of rotation, the mowing thread (10) extending substantially radially outwards because of the centrifugal force and the mowing thread being configured such that it has a varying position of the section relative to its longitudinal axis (L), that the mowing thread (10) has a point-symmetric section and that the section (Q, Q1, Q2, Q3) is constant relative to the longitudinal axis (L)
characterized in
that the position of the section varies relative to the longitudinal axis (L) continuously by a constant angular value per unit of length of the longitudinal axis (L) and that the mowing thread has a polygonal section (Q, Q1, Q2, Q3).

2. A mowing thread according to claim 1,
characterized in
that the mowing thread (10) has several lateral edges (15, 16, 17, 18), extending along the mowing thread (10), which have a constant distance the one to the other and each of which being helicoidal at a distance to the longitudinal axis (L) rotating around this axis.

3. A mowing thread according to claim 1 and 2,
characterized in
that the position of the section (Q, Q1, Q2, Q3) varies relative to the longitiudinal axis (L) by a value of approximately 18 degrees.

4. A mowing thread according to claim 1 or 2,
characterized in
that the mowing thread (10) is permanently twisted while maintaining the polygonal section (Q, Q1, Q2, Q3), whereby the twisting, i.e. the torsion of the turned initial mowing thread, amounts to approximately 50 torsions per meter of the longitudinal axis (L).

5. A mowing thread according to one of the claims 1 to 4
characterized in
that the mowing thread (10) is made of a thermoplastic material and is manufactured by clamping, twisting and by permanent deformation due to addition of heat.

6. A mowing thread according to one of the claims 1 to 5,
characterized in
that the mowing thread (10) has a square section (Q, Q1, Q2, Q3).

## Revendications

1. Fil de coupe (10) pour débroussailleuses (100) avec un moteur d'entraînement (11) qui inculque un mouvement de rotation au fil de coupe (10) tendu à une extrémité (13), le fil de coupe (10) s'étendant vers l'extérieur substantiellement radialement en raison de la force centrifuge et le fil de coupe (10) étant configuré de telle manière qu'il présente une position variable de la section par rapport à son axe longitudinal (L), que le fil de coupe (10) a une section à symétrie ponctuelle et que la section (Q, Q1, Q2, Q3) est constante par rapport à l'axe longitudinal (L),
caractérisé en ce
que la position de la section varie par rapport à l'axe longitudinal (L) continuellement d'une valeur angulaire constante par unité de longueur de l'axe longitudinal (L) et que le fil de coupe a une section polygonale (Q, Q1, Q2, Q3).

2. Fil de coupe selon la revendication 1,
caractérisé en ce
que le fil de coupe (10) présente plusieurs arêtes latérales (15, 16, 17, 18) qui s'étendent le long du fil de coupe (10) qui ont un écartement constant l'une par rapport à l'autre et dont chacune va en forme d'hélice en étant écartée de l'axe longitudinal (L) en tournant autour de celui-ci.

3. Fil de coupe selon la revendication 1 et 2,
caractérisé en ce
que la position de la section (Q, Q1, Q2, Q3) varie par rapport à l'axe longitudinal (L) d'une valeur d'environ 18 degrés par mm.

4. Fil de coupe selon la revendication 1 ou 2,
caractérisé en ce
que le fil de coupe est torsadé de manière permanente en conservant la section polygonale (Q, Q1, Q2, Q3), le torsadage, c'est-à-dire la torsion du fil de coupe de départ retourné comportant environ 50 torsions par mètre de l'axe longitudinal (L).

5. Fil de coupe selon l'une des revendications 1 à 4,
caractérisé en ce
que le fil de coupe (10) est constitué par une matière thermoplastique et est fabriqué par serrage, torsion et par déformation permanente par l'amenée ultérieure de chaleur.

6. Fil de coupe selon l'une des revendications 1 à 5,
caractérisé en ce
que le fil de coupe (10) a une section carrée (Q, Q1, Q2, Q3).
